# EUROPÄISCHE PATENTSCHRIFT

(11) **EP 3 288 724 B1**
(45) Veröffentlichungstag und Bekanntmachung des Hinweises auf die Patenterteilung: **03.06.2020**
(21) Anmeldenummer: 16710944.6
(22) Anmeldetag: 11.03.2016
(51) Int. Cl.: B25J 15/00, B23P 19/02, B62D 25/24

(54) **ROBOTERWERKZEUG ZUM SETZEN VON STOPFEN MIT SCHRÄGMOTOR**
ROBOT TOOL FOR SETTING SEALING PLUGS HAVING AN ANGLED MOTOR
OUTIL DE ROBOT POUR LA POSE DE BOUCHONS AVEC MOTEUR INCLINÉ

(30) Priorität: 29.04.2015 DE 102015207847
(43) Veröffentlichungstag der Anmeldung: 07.03.2018
(73) Patentinhaber: Bayerische Motoren Werke Aktiengesellschaft, 80809 München (DE)
(72) Erfinder: KOSSMANN, Max, 80333 München (DE); SCHMIEDEL, Ingo, 85250 Altomünster / Asbach (DE)
(86) Internationale Anmeldenummer: PCT/EP2016/055230
(87) Internationale Veröffentlichungsnummer: WO 2016/173757

(56) Entgegenhaltungen:
- DE-A1-102008 056 246
- DE-A1-102010 005 798
- DE-A1-102010 010 718
- DE-A1-102014 007 831
- GB-A- 1 399 924
- JP-A- H11 151 625
- US-A1- 2011 209 320

## Beschreibung

Die Erfindung betrifft ein Roboterwerkzeug zum Setzen von Stopfen in Öffnungen in einem Karosseriebauteil, insbesondere auch an schwer zugänglichen Bereichen. Ferner betrifft die Erfindung ein Verfahren zum Setzen von Stopfen in eine Öffnung in einem Karosseriebauteil unter Verwendung des Roboterwerkzeugs.

Damit bei Karosseriebauteilen nach dem Lackieren der flüssige Lack wieder schnell aus den Hohlräumen abfließen kann, werden diese mit zahlreichen, teilweise bis zu mehreren Hundert Öffnungen versehen. Auch zum Setzen von Schweißpunkten sind Löcher vorzusehen. Durch diese Öffnungen kann zudem Wachs in die Hohlräume eingespritzt werden, um das Karosseriebauteil zu versiegeln. Sämtliche Öffnungen müssen während der Montage wieder verschlossen werden, um das Eindringen von Feuchtigkeit bzw. Wasser zu verhindern und das Fahrzeug während des Betriebs vor Korrosion zu schützen. Die Öffnungen werden mit sogenannten Stopfen aus Kunststoff verschlossen, welche es in verschiedenen Durchmessern gibt. Die Stopfen werden von Mitarbeitern zumeist per Hand in die Öffnungen eingesetzt.

Diese Handhabung birgt verschiedene Nachteile. Für den die Stopfen setzenden Mitarbeiter ist die Arbeit unergonomisch, da er sich bücken und strecken muss, um die Stopfen zu setzen. Zudem kostet es einiges an Kraft den Stopfen in die jeweilige Öffnung zu drücken, was auf Dauer sehr anstrengend ist. Dies kann zu einer nachlassenden Konzentration und somit zu größerer Fehleranfälligkeit führen. Da je nach Fahrzeugmodell bis zu mehrere Hundert Stopfen zu setzen sind, werden diese über die ganze Produktion verteilt immer wieder, von verschiedenen Mitarbeitern an unterschiedlichen Stationen positioniert. Dies erfordert viele Handgriffe, die von unzähligen verschiedenen Mitarbeitern unter erheblicher Einarbeitungszeit gelernt werden müssen.

Durch die verschiedenen Durchmesser der Stopfen besteht die Möglichkeit, dass diese im Einzelfall falsch gesetzt werden. Es kann auch nicht ausgeschlossen werden, dass der jeweilige Stopfen zwar an der richtigen Stelle platziert, allerdings nicht mit genügend Kraft in die Karosse gedrückt wird und somit nicht vollständig abdichtet oder sogar während der Fahrt herausfällt. Auch können einzelne Stopfen schlicht vergessen werden. Dadurch kann Feuchtigkeit oder Wasser in die Karosserie eindringen und zu Korrosion führen.

Schließlich handelt es sich bei den Öffnungen um scharfkantige Löcher, an denen sich der Arbeiter beim Einsetzen der Stopfen verletzten könnte.

Es gibt auch robotergestützte Verfahren zum Einsetzen der Stopfen. Jedoch kann dabei an der Setzeinrichtung des Roboterwerkzeugs selbst immer nur ein Stopfen aufgenommen werden. Ferner muss sie nach dem Setzten jedes Stopfens zum Nachlademagazin zurückgefahren werden. Dadurch geht viel Zeit verloren.

Auch arbeitet das Roboterwerkzeug mit Vakuum bzw. Druckluft und benötigt neben dem Stromanschluss auch noch eine Luftversorgung. Druckluft im Allgemeinen ist in der Bereitstellung sehr energieintensiv. Ferner besteht durch die notwendige Verwendung von Druckluftschläuchen die Gefahr des Hängenbleibens bzw. Darüberstolperns, d.h. Verletzungsgefahr.

Auch nachteilig an den bisher verwendeten Roboterwerkzeugen ist, dass diese nicht MRK-gerecht (Mensch-Roboter Kooperation) sind. Die Roboterstation ist eingezäunt, so dass während des Stopfensetzens kein Mensch an dem Karosseriebauteil arbeiten kann. Ein MRK-gerechtes Werkzeug muss entsprechend für Leichtbauroboter mit einer Leistungs- und Kraftbeschränkung gemäß der Definition nach DIN ISO 10218 Teil 1 & Teil 2 gestaltet sein, um so einen kollaborierenden Betrieb nach TS-15066 zu ermöglichen. Wichtig ist hierbei, dass keine Gefahr von möglichen Aktoren des Werkzeugs ausgeht.

Auch ist nachteilig, dass der üblicherweise verwendete Vakuumkopf des Roboterwerkzeugs nicht auswechselbar ist. Somit kann immer nur ein bestimmter Stopfen mit dem zum Vakuumkopf passenden Durchmesser verwendet werden. Nach dem Setzen des Stopfens wird ferner auf den passenden Sitz vertraut, ohne eine Nachprüfung bereit zu stellen. Sollte der Stopfen nicht halten, kann, wie beschrieben, Feuchtigkeit eindringen.

Ferner ist problematisch, dass Stopfen auch an schwer zugänglichen Bereichen der Fahrzeuge, beispielsweise am Fahrzeugunterboden gesetzt werden müssen. Dafür ist notwendig, dass die eingesetzten Werkzeuge eine möglichst kurze axiale Erstreckung aufweisen, um in schmalen Abständen bzw. Zwischenräumen zum Fahrzeug eingesetzt werden zu können.

Weiterer Stand der Technik auf diesem technischen Gebiet ist beispielsweise aus der Offenbarung der Veröffentlichung DE 10 2008 056246 A1 bekannt.

Der Erfindung liegt deshalb die Aufgabe zugrunde, ein Roboterwerkzeug bereit zu stellen, mit dem Stopfen ohne ständiges Nachladen schnell und variabel auch an schwer zugänglichen Bereichen des Fahrzeugs mit wenig Raumerfordernis gesetzt werden können und ein dauerhafter Sitz der Stopfen gewährleistet wird. Ferner ist es Aufgabe der Erfindung, ein Verfahren bereit zu stellen, mit dem die Stopfen durch das Roboterwerkzeug schneller und an schwer zugänglichen Bereichen des Fahrzeugs mit wenig Raumerfordernis gesetzt werden können.

Diese Aufgaben werden durch die Merkmalskombination der jeweiligen Ansprüche 1 und 8 gelöst.

Erfindungsgemäß wird ein Roboterwerkzeug zum Setzen von Stopfen in Öffnungen in einem Karosseriebauteil mit einer Setzeinrichtung bereit gestellt, an der ein Stopfenmagazin mit einer Vielzahl von aufgereihten Stopfen angeordnet ist, die mittels der Setzeinrichtung nachladefrei unmittelbar nacheinander in die jeweiligen Öffnungen des Karosseriebauteils setzbar sind, wobei die Stopfen aus dem in der Setzeinrichtung aufgenommenen Stopfenmagazin über eine Antriebseinheit in vordefinierten Schritten ausschiebbar sind, sich das Stopfenmagazin in eine Axialrichtung erstreckt und die Antriebseinheit in einem Winkel α von 90 - 150°, insbesondere 90 - 120° gegenüber der Axialrichtung an dem Stopfenmagazin angeordnet ist.

Gegenüber einer ausschließlich linearen Anordnung der Antriebseinheit und des Stopfenmagazins in Axialrichtung reduziert sich der für das Roboterwerkzeug benötigte Bauraum mit abgewinkelt zu dem Stopfenmagazin angeordneter Antriebseinheit deutlich, so dass auch schwer zugängliche Bereiche wie der Fahrzeugunterboden mit Stopfen besetzt werden können. Das Werkzeug wird insgesamt kompakter.

Ferner ist erfindungsgemäß vorgesehen, dass die Antriebseinheit einen Motor und ein flexibles als Vorschubelement ausgebildetes Bürstenkabel umfasst, wobei das Bürstenkabel mit einem in der ersten Richtung versetzbaren Schlitten verbunden ist, über den die Stopfen aus dem Stopfenmagazin bewegbar bzw. herausschiebbar sind. Die erfindungsgemäße Verwendung eines flexiblen Bürstenkabels löst das Problem der gewinkelt angeordneten Bauelemente Antriebseinheit und Stopfenmagazin und ermöglicht einen Vorschub des Schlittens in Axialrichtung, obwohl die Antriebseinheit schräg zu dem Stopfenmagazin und somit den darin gestapelten Stopfen angeordnet ist. Als "Bürstenkabel" ist eine flexible Spiralwelle definiert.

Besonders günstig ist eine Ausführung, bei der das Bürstenkabel eine Umlenkung in einem Winkel β von 60 - 120°, insbesondere von 80 - 100°, weiter bevorzugt von 90° aufweist.

Ferner wird in einer Ausführung vorgesehen, bei der die Antriebseinheit ein Antriebselement umfasst, das im Eingriff mit dem Bürstenkabel steht und dieses im Betrieb derart bewegt, dass es den Schlitten versetzt. Das Antriebselement weist hierzu Krafteinleitungselemente, beispielsweise Zähne, auf, die in am Bürstenkabel vorgesehene komplementäre Aufnahmen eingreifen und das Bürstenkabel entlang der Umlenkung bewegen.

In einer Weiterbildung der Erfindung ist vorgesehen, dass an einem Auslass der Setzeinrichtung eine umlaufende elastische Lippe vorgesehen ist, welche die Stopfen in dem Stopfenmagazin hält und durch eine axiale Bewegung der Stopfen in axialer Richtung des Roboterwerkzeugs elastisch umbiegbar ist. Die Integration des Stopfenmagazins und der Setzeinrichtung ermöglicht es, eine Vielzahl von Stopfen nacheinander zu setzen, ohne dass die Setzeinrichtung immer wieder einen einzelnen Stopfen aufnehmen muss. Durch eine passgenaue Führung der Stopfen im Stopfenmagazin ist eine gerade und ideal geführte Ausschiebung gewährleistet. Die Integration der elastischen Lippe gewährleistet einen sicheren Verbau der Stopfen an der jeweiligen Öffnung und hält den jeweils nachfolgenden Stopfen im Stopfenmagazin zurück. Durch die Elastizität erfolgt keine mechanische Einwirkung auf den Stopfen selbst, so dass die Montage die vorab definierten und festgelegten Eigenschaften des Stopfens nicht beeinflusst.

In einer vorteilhaften Ausführungsvariante ist ferner vorgesehen, dass die elastische Lippe an der Setzeinrichtung zu einem axialen Außenrand der Setzeinrichtung axial beabstandet angeordnet ist. Der Abstand gewährleistet ein flächiges Anlegen der Setzeinrichtung an das mit dem Stopfen zu versehene Bauteil vor und nach dem Setzen des Stopfens. Erfindungsgemäß wird in einer Ausführung vorgesehen, dass die Stopfen jeweils einen nicht-elastischen Deckel aufweisen, wobei der im Stopfenmagazin vorderste Stopfen im Bereich der Setzeinrichtung durch die elastische Lippe gehalten ist. Die elastische Lippe umgreift den Deckel des Stopfens und fixiert ihn positionsgetreu im Stopfenmagazin. Die Tatsache, dass der Deckel nicht-elastisch ist, ermöglicht eine vordefinierte Form, die während der Montage unverändert bleibt.

Die elastische Lippe liegt an dem jeweiligen Deckel des vordersten Stopfens an und wird im Zuge der Ausschiebebewegung des Stopfens durch den Deckel umgebogen. Sobald der Stopfen an dem Bauteil gesetzt ist, klappt die elastische Lippe zurück in die Setzeinrichtung und hält den nachfolgenden Stopfen im Magazin. Während der Setzbewegung führt die elastische Lippe den Stopfen in axialer Setzrichtung und verhindert ein Verkanten oder schiefes Eindringen in die Öffnung des Bauteils.

In einer bevorzugten Ausführung der Erfindung ist ferner vorgesehen, dass das Roboterwerkzeug MRK-gerecht und die Setzeinrichtung nacheinander an die jeweiligen Öffnungen führbar ist, um die Stopfen zu setzen. Die Positionierung kann automatisch kamerabasiert oder durch beliebige andere aus dem Stand der Technik bekannte Verfahren (z.B. eine kraftgeregelte Positionierung des Roboters, Positionierung mittels Sensoren (kapazitiv, Nährungsschalter, Lichttaster usw.) erfolgen. Die Setzeinrichtung wird dabei an die Öffnung geführt, das Einsetzen des Stopfens erfolgt durch Maschinenkraft. Durch die MRKgerechte Gestaltung ist auch ermöglicht, dass neben dem Setzen von Stopfen gleichzeitig weitere Arbeiten an dem Karosseriebauteil verrichtet werden können und das Stopfensetzen in weitere Montageabläufe integrierbar ist.

Die Erfindung sieht in einem günstigen Ausführungsbeispiel ferner vor, dass die Stopfen aus dem in der Setzeinrichtung aufgenommenen Stopfenmagazin über die als elektrischen Spindelantrieb gebildete Antriebseinheit in vordefinierten Schritten, beispielsweise unter Verwendung eines Spindelmotors, ausschiebbar ist. Hierdurch ist ermöglicht, die Stopfen vor und während dem Setzvorgang exakt bezüglich der Eindringtiefe in die Öffnung zu positionieren. Auch kann eine Vorabposition (Preload) zum besseren Einführen der Stopfen in die Öffnung gewährleistet werden.

Erfindungsgemäß wird die Setzeinrichtung des Roboterwerkzeugs in einem Ausführungsbeispiel auswechselbar ausgeführt, so dass unterschiedliche Stopfen in entsprechend unterschiedliche Öffnungen setzbar sind. Karosserieabhängig und öffnungsabhängig können unterschiedliche Stopfengrößen und Stopfenausbildungen gesetzt werden.

Die Erfindung richtet sich ferner an ein Verfahren zum Setzen der Stopfen in der Öffnung im Karosseriebauteil unter Verwendung des oben beschriebenen Roboterwerkzeugs und zeichnet sich dadurch aus, der zu setzende Stopfen zunächst über ein vorbestimmtes Maß aus dem Auslass der Setzeinrichtung durch die Antriebseinheit herausgeschoben und der teilweise herausgeschobene Stopfen mittels der Setzeinrichtung in die zu verschließende Öffnung so eingesetzt wird, dass ein Teil des Stopfens die Öffnung haltend hintergreift, und schließlich der Stopfen aus der Setzeinrichtung ausgeschoben und die Setzeinrichtung abgezogen wird, wobei die Stopfen aus dem in der Setzeinrichtung aufgenommenen Stopfenmagazin über die Antriebseinheit in vordefinierten Schritten ausgeschoben werden, während sich das Stopfenmagazin axial in eine erste Richtung erstreckt und die Antriebseinheit in einem Winkel α von 90 - 170° gegenüber der ersten Richtung an dem Stopfenmagazin angeordnet ist.

Günstig ist dabei ein Verfahrensschritt, wonach zum Einsetzen des Stopfens die Setzeinrichtung frei schwingend geschalten wird, so dass sich der Stopfen über die schwingende Bewegung der Setzeinrichtung und daran angeschlossenen Bauteile selbständig mittig zur zu verschließenden Öffnung positioniert. Dabei ist vorteilhaft, wenn der Stopfen im in die Öffnung einzuführenden Bereich konisch ausgebildet ist.

Durch Nutzung des erfindungsgemäßen Roboterwerkzeugs und des entsprechenden Verfahrens muss kein Mensch eine für ihn ergonomisch ungünstige Bewegung verrichten. Die Kraftaufwendung zum Setzen der Stopfen erfolgt durch die Maschine. Durch den schnellen Setzvorgang müssen nicht mehr viele verschiedene Mitarbeiter mit dem Einsetzen der Stopfen beauftragt werden. Man spart Einarbeitungszeit und Planzeit, d.h. Zeit welche der Mitarbeiter bei jedem Fahrzeug mit dem Verbau beschäftigt ist. Das Einsetzen der Stopfen durch den Roboter geschieht schneller als bei Handarbeit wodurch Kosten einspart werden. Ferner setzt der Roboter die Stopfen unabhängig von deren Durchmesser immer an die richtige Stelle. Somit können Fehler vermindert und die Qualität des Setzens erhöht werden. Schließlich kommt der Mitarbeiter nicht mehr in Kontakt mit den scharfkantigen Öffnungen und kann sich daran auch nicht mehr verletzen. Durch die abgewinkelte Ausführung von Stopfenmagazin und Antriebseinheit können auch Bereiche der Fahrzeuge mit Stopfen versehen werden, die schwer zugänglich sind und nur wenig Platz für einen Werkzeugeinsatz bieten.

Gegenüber den bisherigen roboterbasierten Werkzeugen ist es durch die Aneinanderreihung mehrerer Stopfen im Stopfenmagazin nicht mehr notwendig, nach jedem Einsetzvorgang einen neuen Stopfen aufzunehmen. Somit können Zeit und Kosten eingespart werden. Durch Verwendung des Spindelantriebs und den Wegfall des Druckluftvakuummechanismus werden zum einen Energie und Kosten gespart, zum anderen können auch die Druckluftschläuche entfallen. Dadurch verringern sich der Aufwand und das Unfallrisiko.

Durch die wechselbar gestaltete Setzeinrichtung kann das Roboterwerkzeug auf die jeweilige Anforderung bzw. den jeweiligen Durchmesser des Stopfens angepasst werden. Es ist somit universell einsetzbar.

Alle oben beschriebenen Merkmale sind frei kombinierbar soweit dies technisch möglich ist.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: ein Roboterwerkzeug gemäß der Erfindung;
- Fig. 2: eine Schnittansicht A-A aus Figur 1.

Die Figuren sind beispielhaft schematisch. Gleiche Bezugszeichen benennen gleiche Teile in allen Ansichten.

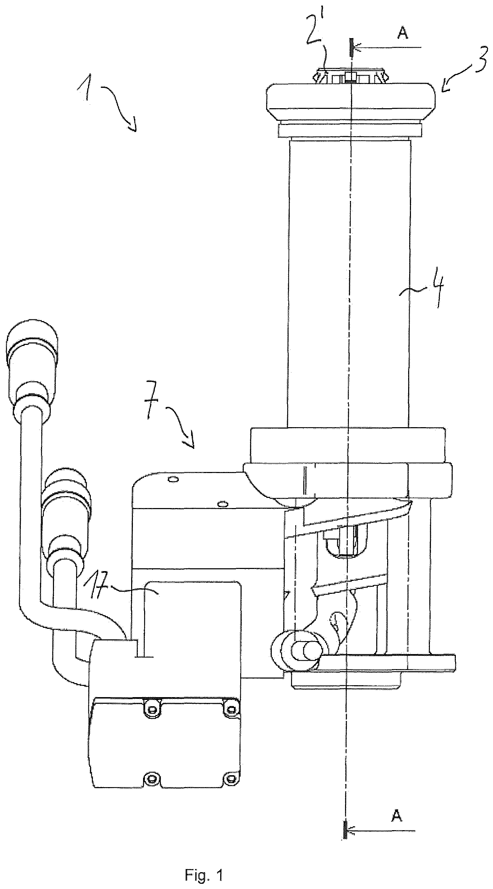

In Figur 1 ist ein Roboterwerkzeug 1 zum Setzen von Stopfen 2 in Öffnungen in einem Karosseriebauteil gezeigt. Das Roboterwerkzeug 1 umfasst eine Setzeinrichtung 3, an der ein Stopfenmagazin 4 mit einer Vielzahl von darin aufgereihten Stopfen 2 angeordnet ist. Die in dem Stopfenmagazin 4 aufgereihten Stopfen 2 werden über einen von eine Antriebseinheit 7 in Längsrichtung versetzbaren Schlitten 8 aus dem Auslass 9 in vordefinierten Schritten ausgeschoben, um eine exakte Positionierung der Stopfen 2 in der jeweiligen Öffnung zu gewährleisten. Die weiteren Bauteile des Spindelantriebs 7 sind nicht dargestellt.

Das Roboterwerkzeug 1 ist MRK-gerecht und kann für einen teilautomatischen oder manuellen Betrieb entsprechende nicht dargestellte Aufnahmen zur menschlichen Führung aufweisen. Die Setzeinrichtung 3 weist an ihrem Auslass 9 die elastische umlaufende Lippe 10 auf, über die der nicht-elastische Deckel 22 des Stopfens 2 gehalten ist. Die Setzeinrichtung 3 ist wechselbar auf dem Stopfenmagazin 4 lösbar befestigt, beispielsweise aufgeschraubt.

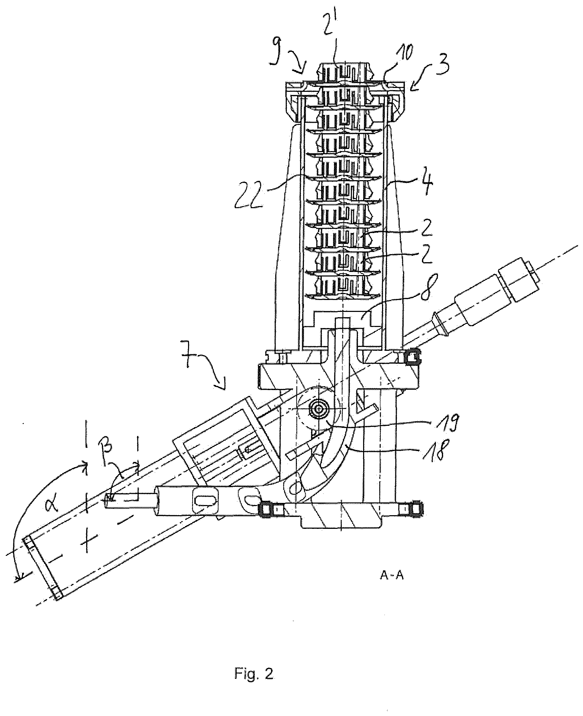

In Figur 2 ist eine Schnittansicht A-A aus Figur 1 einer an dem Stopfenmagazin 4 angeordneten Setzeinrichtung 3 eines Roboterwerkzeugs 1 gezeigt, bei der die elastische Lippe 10 durch den Deckel 22 des vordersten Stopfens 2' in axialer Richtung umgebogen ist. Im gezeigten Zustand wird gerade der vorderste Stopfen 2' aus dem Stopfenmagazin 4 ausgeschoben. Nach dem Austritt des Stopfens 2' klappt die elastische Lippe 10 zurück in eine waagerechte Position. Gegenüber dem axialen Außenrand der Setzeinrichtung 3 ist die elastische Lippe 10 beabstandet angeordnet.

Das Stopfenmagazin 4 erstreckt sich in Axialrichtung. Die Antriebseinheit 7 ist gegenüber der Axialrichtung in einem Winkel α von 120° geneigt zu dem Stopfenmagazin 4 angeordnet. Die Antriebseinheit umfasst den Motor 17, das als Vorschubelement ausgebildete und flexible Bürstenkabel 18 sowie das Antriebselement 19, das als rotierende Welle mit Eingriffszähnen in das Bürstenkabel 18 ausgebildet ist. Die Rotation des Antriebselements 19 fördert das flexible Bürstenkabel 18 und bewegt damit den daran befestigen Schlitten 8 und mithin die Stopfen 2 in Axialrichtung. Das Bürstenkabel 18 weist in der Antriebseinheit 7 eine Umlenkung in einem Winkel β von 90° auf.

Bei dem Verfahren zum Setzen des Stopfens 2 in die Öffnung in einem Karosseriebauteil wird über die Antriebseinheit 7 der Schlitten 8 in Längsrichtung versetzt, wodurch die Stopfen 2 nacheinander aus dem Stopfenmagazin 4 durch die Setzeinrichtung 3 ausgeschoben werden können. In einem über ein vorbestimmtes Maß aus dem Auslass 9 der Setzeinrichtung 3 herausgeschobenen Zustand wird der Stopfen 2 in die zu verschließende Öffnung eingesetzt, so dass der Hintergriffabschnitt 21 des Stopfens 2 die Öffnungswand hintergreift. Zum Einsetzen des Stopfens 2 wird die Setzeinrichtung 3 und die verbundenen Bauteile frei schwingend geschalten, so dass sich der Stopfen 2 über die schwingende Bewegung der Setzeinrichtung 3 selbständig mittig zur zu verschließenden Öffnung positioniert. Der Hintergriffabschnitt 21 des Stopfens 2 hintergreift somit sicher die Wand der Öffnung. Durch den Spindeltrieb 7 wird der Stopfen 2 schließlich vollständig aus dem Stopfenmagazin 4 herausgeschoben.

Zum Nachfüllen des Stopfenmagazins 4 kann dieses ausgetauscht oder mit der Setzeinrichtung 3 ein Stapel von Stopfen 2 überstülpt bzw. überfahren werden, wobei hier der Spindelantrieb 7 langsam analog zur Überstülpungsgeschwindigkeit des Roboters gegenläufig verfährt um ein falsches Orientieren des Stopfens 2 (Verdrehen um 180 Grad im Magazin) zu verhindern. Der Stapel an Stopfen 2 ist dabei vorzugsweise in einer Führung angeordnet.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht, sofern sie der Definition der Erfindung gemäß den Ansprüchen entsprechen. Beispielsweise sind andere Stopfenaufbauten möglich, die an die entsprechenden Öffnungen und Wandstärken angepasst sind. Ferner kann die elastische Lippe aus verschiedenen Materialien hergestellt sein, solange eine ausreichende Halte- und Führungsfunktion sowie eine angemessene Kraft zur Umbiegung gewährleistet ist.

## Patentansprüche

1. Roboterwerkzeug zum Setzen von Stopfen (2) in Öffnungen in einem Karosseriebauteil mit einer Setzeinrichtung (3), an der ein Stopfenmagazin (4) mit einer Vielzahl von aufgereihten Stopfen (2) angeordnet ist, die mittels der Setzeinrichtung (3) nachladefrei unmittelbar nacheinander in die jeweiligen Öffnungen des Karosseriebauteils setzbar sind, wobei die Stopfen (2) aus dem in der Setzeinrichtung (3) aufgenommenen Stopfenmagazin (4) über eine Antriebseinheit (7) in vordefinierten Schritten ausschiebbar sind, wobei sich das Stopfenmagazin (4) axial in eine Axialrichtung erstreckt und die Antriebseinheit (7) in einem Winkel (a) von 90 - 170° gegenüber der Axialrichtung zu dem Stopfenmagazin (4) angeordnet ist und wobei die Antriebseinheit (7) einen Motor (17) und ein flexibles als Vorschubelement ausgebildetes Bürstenkabel (18) umfasst, wobei das Bürstenkabel (18) mit einem in der Axialrichtung versetzbaren Schlitten (8) verbunden ist, über den Stopfen (2) aus dem Stopfenmagazin (4) bewegbar sind.

2. Roboterwerkzeug nach Anspruch 1, **dadurch gekennzeichnet, dass** das Bürstenkabel (18) eine Umlenkung in einem Winkel (β) von 60 - 120° aufweist.

3. Roboterwerkzeug nach einem der vorigen Ansprüche 1 bis 2, **dadurch gekennzeichnet, dass** die Antriebseinheit (7) ein Antriebselement (19) umfasst, das im Eingriff mit dem Bürstenkabel (18) steht und dieses im Betrieb bewegt, so dass es den Schlitten (8) versetzt.

4. Roboterwerkzeug nach einem der vorigen Ansprüche, **dadurch gekennzeichnet, dass** an einem Auslass der Setzeinrichtung (3) eine umlaufende elastische Lippe (10) vorgesehen ist, welche die Stopfen (2) in dem Stopfenmagazin (4) hält und durch eine axiale Bewegung der Stopfen (2) in axialer Richtung des Roboterwerkzeugs (1) elastisch umbiegbar ist.

5. Roboterwerkzeug nach einem der vorigen Ansprüche, **dadurch gekennzeichnet, dass** die Stopfen (2) jeweils einen nicht-elastischen Deckel (22) aufweisen, wobei der vorderste Stopfen (2') im Bereich der Setzeinrichtung (3) durch die elastische Lippe (10) an dem Deckel (22) gehalten ist.

6. Roboterwerkzeug nach zumindest einem der vorigen Ansprüche, **dadurch gekennzeichnet, dass** es MRK-gerecht und die Setzeinrichtung (3) nacheinander automatisiert an die Öffnungen führbar ist.

7. Roboterwerkzeug nach zumindest einem der vorigen Ansprüche, **dadurch gekennzeichnet, dass** die Setzeinrichtung (3) auswechselbar ist, so dass unterschiedliche Stopfen (2) in entsprechend unterschiedliche Öffnungen setzbar sind.

8. Verfahren zum Setzen eines Stopfens in eine Öffnung in einem Karosseriebauteil unter Verwendung des Roboterwerkzeugs (1) nach den Ansprüchen 1 bis 7, **dadurch gekennzeichnet, dass** der zu setzende Stopfen (2) über ein vorbestimmtes Maß aus dem Auslass der Setzeinrichtung (3) durch die Antriebseinheit (7) herausgeschoben und der teilweise herausgeschobene Stopfen (2) mittels der Setzeinrichtung (3) automatisiert in die zu verschließende Öffnung eingesetzt wird, so dass ein Teil des Stopfens (2) die Öffnung haltend hintergreift, und der Stopfen (2) aus der Setzeinrichtung (3) ausgeschoben und die Setzeinrichtung (3) abgezogen wird, wobei die Stopfen (2) aus dem in der Setzeinrichtung (3) aufgenommenen Stopfenmagazin (4) über die Antriebseinheit (7) in vordefinierten Schritten ausgeschoben wird, während sich das Stopfenmagazin (4) axial in eine erste Richtung erstreckt und die Antriebseinheit (7) in einem Winkel (α) von 90 - 150° gegenüber der ersten Richtung an dem Stopfenmagazin (4) angeordnet ist.

9. Verfahren nach dem vorigen Anspruch, **dadurch gekennzeichnet, dass** zum Einsetzen des Stopfens (2) die Setzeinrichtung (3) frei schwingend geschalten wird, wobei sich der Stopfen (2) über die schwingende Bewegung der Setzeinrichtung (3) selbständig mittig zur zu verschließenden Öffnung positioniert.

## Claims

1. Robot tool for placing sealing plugs (2) into openings in an automotive body component, having a placing installation (3) on which a sealing plug magazine (4) having a plurality of lined-up sealing plugs (2) which by means of the placing installation (3) are capable of being placed in a directly sequential manner and without reloading into the respective openings of the automotive body component is disposed, wherein the sealing plugs (2) by way of a drive unit (7) are capable of being ejected in predefined steps from the sealing plug magazine (4) that is received in the placing installation (3), wherein the sealing plug magazine (4) extends axially in an axial direction, and the drive unit (7) is disposed relative to the sealing plug magazine (4) at an angle (α) of 90 - 170° in relation to the axial direction, and wherein the drive unit (7) comprises a motor (17) and a flexible brush cable (18) that is configured as an advancing element, wherein the brush cable (18) is connected to a slide (8) which is capable of being repositioned in the axial direction and by way of which sealing plugs (2) are capable of being moved out of the sealing plug magazine (4).

2. Robot tool according to Claim 1, **characterized in that** the brush cable (18) has a deflection at an angle (β) of 60 - 120°.

3. Robot tool according to either of preceding Claims 1 and 2, **characterized in that** the drive unit (7) comprises a drive element (19) which engages with the brush cable (18) and during operation moves said brush cable (18) such that the latter repositions the slide (8).

4. Robot tool according to one of the preceding claims, **characterized in that** an encircling elastic lip (10) which holds the sealing plugs (2) in the sealing plug magazine (4) and by way of an axial movement of the sealing plugs (2) is capable of being elastically bent in the axial direction of the robot tool (1) is provided on an outlet of the placing installation (3).

5. Robot tool according to one of the preceding claims, **characterized in that** the sealing plugs (2) in each case have one non-elastic cover (22), wherein the frontmost sealing plug (2') in the region of the placing installation (3) is held on the cover (22) by the elastic lip (10).

6. Robot tool according to at least one of the preceding claims, **characterized in that** said robot tool is adapted for human-robot interaction and the placing installation (3) is capable of being guided to the openings sequentially and in an automated manner.

7. Robot tool according to at least one of the preceding claims, **characterized in that** the placing installation (3) is interchangeable such that dissimilar sealing plugs (2) are placeable into respectively dissimilar openings.

8. Method for placing a sealing plug into an opening in an automotive body component, using the robot tool (1) according to Claims 1 to 7, **characterized in that** the sealing plug (2) to be placed is ejected from the outlet of the placing installation (3) by a predetermined measure by way of the drive unit (7), and the partially ejected sealing plug (2) by means of the placing installation (3) is inserted in an automated manner into the opening to be closed such that part of the sealing plug (2) engages in the opening from behind so as to be held therein, and the sealing plug (2) is ejected from the placing installation (3), and the placing installation (3) is retracted, wherein the sealing plugs (2) by way of the drive unit (7) is ejected in predefined steps from the sealing plug magazine (4) that is received in the placing installation (3), while the sealing plug magazine (4) extends axially in a first direction, and the drive unit (7) is disposed on the sealing plug magazine (4) at an angle (α) of 90 - 150° in relation to the first direction.

9. Method according to the preceding claim, **characterized in that**, in order for the sealing plug (2) to be placed, the placing installation (3) is held so as to freely oscillate, wherein the sealing plug (2) by way of the oscillating movement of the placing installation (3) is positioned in a self-acting manner so as to be centric to the opening to be closed.

## Revendications

1. Outil de robot pour poser des bouchons (2) dans des ouvertures dans une pièce de carrosserie, comprenant un dispositif de pose (3) sur lequel est disposé un magasin de bouchons (4) avec une pluralité de bouchons alignés (2) qui peuvent être posés directement les uns après les autres, sans recharge, dans les ouvertures respectives de la pièce de carrosserie au moyen du dispositif de pose (3), les bouchons (2) pouvant être éjectés du magasin de bouchons (4), logé dans le dispositif de pose (3), par l'intermédiaire d'une unité d'entraînement (7) par étapes prédéfinies, dans lequel le magasin de bouchons (4) s'étend axialement dans une direction axiale et l'unité d'entraînement (7) est disposée par rapport au magasin de bouchons (4) selon un angle (α) de 90 à 170° par rapport à la direction axiale, et l'unité d'entraînement (7) comprend un moteur (17) et un flexible de balai souple (18), réalisé sous forme d'élément d'avance, le flexible de balai (18) étant relié à un chariot (8) pouvant être décalé dans la direction axiale et permettant de faire sortir des bouchons (2) du magasin de bouchons (4).

2. Outil de robot selon la revendication 1, **caractérisé en ce que** le flexible de balai (18) présente un coude selon un angle (β) de 60 à 120°.

3. Outil de robot selon l'une quelconque des revendications précédentes 1 et 2, **caractérisé en ce que** l'unité d'entraînement (7) comprend un élément d'entraînement (19) qui est en prise avec le flexible de balai (18) et le déplace en cours de fonctionnement de façon à décaler le chariot (8).

4. Outil de robot selon l'une quelconque des revendications précédentes, **caractérisé en ce qu'**à une sortie du dispositif de pose (3) est prévue une lèvre élastique périphérique (10) qui retient les bouchons (2) dans le magasin de bouchons (4) et qui peut être repliée élastiquement par un mouvement axial des bouchons (2) dans la direction axiale de l'outil de robot (1).

5. Outil de robot selon l'une quelconque des revendications précédentes, **caractérisé en ce que** les bouchons (2) comportent respectivement un couvercle non élastique (22), le bouchon à l'avant (2') étant retenu sur le couvercle (22) au niveau du dispositif de pose (3) par la lèvre élastique (10).

6. Outil de robot selon au moins l'une des revendications précédentes, **caractérisé en ce qu'**il est compatible CHR et le dispositif de pose (3) peut être successivement rapproché des ouvertures de manière automatisée.

7. Outil de robot selon au moins l'une des revendications précédentes, **caractérisé en ce que** le dispositif de pose (3) est remplaçable de sorte que différents bouchons (2) peuvent être posés dans différentes ouvertures correspondantes.

8. Procédé pour poser un bouchon dans une ouverture dans une pièce de carrosserie en utilisant l'outil de robot (1) selon les revendications 1 à 7, **caractérisé en ce que** :
le bouchon à poser (2) est éjecté par l'unité d'entraînement (7) d'une distance prédéterminée de la sortie du dispositif de pose (3), et le bouchon (2) partiellement éjecté est inséré de manière automatisée au moyen du dispositif de pose (3) dans l'ouverture à fermer de sorte qu'une partie du bouchon (2) saisit l'ouverture par l'arrière pour la maintenir, et le bouchon (2) est éjecté du dispositif de pose (3) et retiré dans la direction de pose (3), les bouchons (2) étant éjectés du magasin de bouchons (4), logé dans le dispositif de pose (3), par l'intermédiaire de l'unité d'entraînement (7) par des étapes prédéfinies, alors que le magasin de bouchons (4) s'étend axialement dans une première direction et l'unité d'entraînement (7) est disposée sur le magasin de bouchons (4) selon un angle (α) de 90 à 150° par rapport à la première direction.

9. Procédé selon la revendication précédente, **caractérisé en ce que** pour l'insertion du bouchon (2), le dispositif de pose (3) est maintenu à oscillation libre, le mouvement oscillant du dispositif de pose (3) permettant au bouchon (2) de se positionner de lui-même de manière centrée par rapport à l'ouverture à fermer.
